# EUROPÄISCHE PATENTSCHRIFT

(11) **EP 3 514 423 B1**
(45) Veröffentlichungstag und Bekanntmachung des Hinweises auf die Patenterteilung: **04.11.2020**
(21) Anmeldenummer: 19151817.4
(22) Anmeldetag: 15.01.2019
(51) Int. Cl.: F16K 31/06, H01F 7/08, H01F 7/16, F16K 27/00

(54) **BETÄTIGUNGSMAGNET**
ACTUATION MAGNET
AIMANT D'ACTIONNEMENT

(30) Priorität: 19.01.2018 DE 102018000450
(43) Veröffentlichungstag der Anmeldung: 24.07.2019
(73) Patentinhaber: Hydac Fluidtechnik GmbH, 66280 Sulzbach/Saar (DE)
(72) Erfinder: Fuchs, Patrik, 66459 Kirkel (DE); Kattler, Frank, 66346 Püttlingen (DE)
(74) Vertreter: Bartels und Partner, Patentanwälte

(56) Entgegenhaltungen:
- DE-A1- 3 519 865
- DE-A1-102014 015 559
- US-A- 5 875 922
- US-A1- 2004 164 829

## Beschreibung

Die Erfindung betrifft einen Betätigungsmagnet mit den Merkmalen im Oberbegriff von Anspruch 1.

Betätigungsmagnete sind Stand der Technik. Ein bevorzugtes Einsatzgebiet ist die Ansteuerung von Ventilen für Fluide, wie flüssige oder gasförmige Arbeitsmedien. Beispielsweise zeigt die DE 10 2009 051 572 A1 den Einsatz eines Magneten der eingangs genannten Gattung zur Ventilbetätigung. Bei manchen Anwendungsgebieten, bei denen mehrere von Betätigungsmagneten anzusteuernde Ventile benutzt werden, wie dies beispielsweise bei mobilen Einheiten der Fall ist, wo Ventile für Fahrantrieb, einschließlich hydraulischer Bremsanlage, sowie für die Arbeitshydraulik zu betätigen sind, ist an Ventilblöcken mit mehreren Ventilen eine entsprechende Anzahl von Betätigungsmagneten in Reihe mit sehr hoher Packungsdichte anzubauen. Dies zwingt dazu, die Betätigungsmagnete als Kompaktmagnete mit geringen Außenmaßen auszubilden, wobei bei manchen der in Frage kommenden Ventilblöcke der Abstand zwischen aufeinanderfolgenden Ventilen derart gering ist, dass die dem Zwischenraum entsprechende Abmessung der Betätigungsmagnete nicht größer als beispielsweise 30 mm sein darf. Der Zwang zur kleinvolumigen Bauweise verringert die Menge des ferromagnetischen Materials, das im Magnetgehäuse für den Magnetfluss zur Verfügung steht und begrenzt daher die für die Ventilsteuerung nutzbare Magnetkraft.

Die US 5 875 922 beschreibt einen Betätigungsmagnet mit den Merkmalen im Oberbegriff von Anspruch 1 mit einem einen Mantel aufweisenden Magnetgehäuse und mit mindestens einem im Magnetgehäuse angeordneten Spulenkörper, der bei Bestromung einen Magnetanker zumindest in einer Richtung längs einer Betätigungsachse verfährt, wobei der Mantel des Magnetgehäuses entlang seiner Längserstreckung parallel zur Betätigungsachse und im Querschnitt gesehen an mindestens einer Stelle eine Materialanhäufung aufweist, die von der sonstigen Materialverteilung im Mantel des Magnetgehäuses abweicht.

Weitere Betätigungsmagnete gehen aus der US 2004/0164829 A1, der DE 35 19 865 A1 und der DE 10 2014 015 559 A1 hervor.

Im Hinblick auf diese Problematik stellt sich die Erfindung die Aufgabe, einen Betätigungsmagneten der eingangs genannten Gattung zur Verfügung zu stellen, der sich trotz geringen Bedarfs an Einbauraum durch eine hohe Magnetkraft auszeichnet.

Erfindungsgemäß ist diese Aufgabe durch einen Betätigungsmagneten gelöst, der die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass der Mantel des Magnetgehäuses sich an seinem einen Ende in eine Flanschplatte erweitert mit zwei entlang der Betätigungsachse diametral einander gegenüberliegenden, stegartigen Befestigungsteilen, die in derselben Richtung wie die jeweils zuordenbare Materialanhäufung vorstehen. Dadurch bildet der Betätigungsmagnet einen Baukörper, der, in Richtung der Befestigungsteile der Flanschplatte und der beiden Materialanhäufungen gesehen, langgestreckter als in der hierzu senkrechten, die Montagebreite bildenden Richtung ist.

Es ist ferner vorgesehen, dass der Mantel des Magnetgehäuses entlang seiner Längserstreckung parallel zur Betätigungsachse und im Querschnitt gesehen an mindestens einer Stelle eine Materialanhäufung aufweist, die von der sonstigen Materialverteilung im Mantel des Magnetgehäuses abweicht. Das für den Rückfluss durch das einen Teil des magnetischen Eisenkreises bildende Magnetgehäuse zusätzlich zur Verfügung gestellte Material führt zu einer Erhöhung der effektiven Magnetkraft. Dadurch, dass die Materialanhäufung von der sonstigen Materialverteilung im Mantel des Magnetgehäuses abweicht, kann die Außenabmessung, gemessen in der Montagerichtung mehrerer aufeinanderfolgend einzubauender Betätigungsmagnete, unverändert belassen werden, so dass die Erhöhung der Magnetkraft nicht durch eine Vergrößerung der Montagebreite erkauft werden muss. Dadurch steht ein Kompaktmagnet zur Verfügung, der durch hohe Magnetkraft eine sichere Betätigung von Einrichtungen, wie Ventilen, gewährleistet, trotzdem jedoch einen Einbau mit hoher Packungsdichte ermöglicht.

Mit Vorteil ist die Anordnung so getroffen, dass der Mantel des Magnetgehäuses die jeweilige Materialanhäufung vorzugsweise über seine gesamte Längserstreckung gesehen aufweist.

Bei besonders vorteilhaften Ausführungsbeispielen ist die jeweilige Materialanhäufung durch eine Verdickung im Mantelquerschnitt gebildet, die vorzugsweise gleichförmig über die gesamte Längserstreckung des Mantels verläuft. Die jeweilige Verdickung ist dabei an einem Umfangsbereich des Mantels vorgesehen, der nicht zu einer Vergrößerung der Montagebreite führt.

Der Mantel kann auf seiner Innenumfangsseite einen Kreiszylinder ausbilden, der auf seiner Außenseite teilweise von Kreiszylinderabschnitten mit größerem Durchmesser umfasst ist, zwischen deren Enden sich die Wand des Mantels, im Querschnitt gesehen, stetig unter Bildung der jeweiligen Materialanhäufung verbreitert.

Dabei kann die Anordnung mit Vorteil so getroffen sein, dass die Materialanhäufungen sich diametral zur Betätigungsachse einander gegenüberliegend im Mantel des Magnetgehäuses erstrecken. Bei solcher Gestaltung kann, im Querschnitt gesehen, der innere Umfang des Mantels ein Kreis und der äußere Umfang eine Art Oval sein.

Bei besonders vorteilhaften Ausführungsbeispielen erweitert sich der Mantel des Magnetgehäuses an seinem einen Ende einstückig in die Flanschplatte.

Mit Vorteil kann der Mantel des Magnetgehäuses an seinem der Flanschplatte gegenüberliegenden Ende ein zylindrisches Endstück ausbilden, das umgebördelt den in einer Spulenaufnahme jeweils aufgenommenen Spulenkörper im Magnetgehäuse festlegt. Diese Bauweise begünstigt die rationelle und kostengünstige Fertigung des Betätigungsmagneten.

Vorzugsweise endet der in der Spulenaufnahme aufgenommene Spulenkörper benachbart zu der Flanschplatte.

Die Fertigung des Betätigungsmagneten gestaltet sich besonders rationell und kostengünstig, wenn das Magnetgehäuse, bestehend aus Mantel, Flanschplatte und dem umbördelbaren Ende, aus einem Fließpressteil gebildet ist.

Nachstehend ist die Erfindung anhand eines in der Zeichnung dargestellten Ausführungsbeispiels im Einzelnen erläutert. Es zeigen:
- Fig. 1: einen gegenüber einer praktischen Ausführungsform etwa 2 ½-fach vergrößert gezeichneten Längsschnitt des Ausführungsbeispiels des erfindungsgemäßen Betätigungsmagneten;
- Fig. 2: einen Querschnitt des Ausführungsbeispiels, entsprechend der in Fig. 1 mit II-II bezeichneten Schnittlinie; und
- Fig. 3: eine perspektivische Schrägansicht des Ausführungsbeispiels.

In der beigefügten Zeichnung ist ein Magnetgehäuse als Ganzes mit 2 bezeichnet, das als Fließpressteil aus einem ferromagnetischen Werkstoff gebildet ist und einen Mantel 4 aufweist, der die Außenseite des Magnetgehäuses 2 bildet und sich von einer verdickten Flanschplatte 6 ausgehend bis zu einem in den Figuren obenliegenden Ende 8 erstreckt. Von der Flanschplatte 6 ausgehend umgibt der Mantel 4 mit seiner Innenumfangsseite einen Kreiszylinder 10, der zu einer zentralen Betätigungsachse 12 konzentrisch ist. Zur Betätigungsachse 12 diametral gegenüberliegend weist die Flanschplatte 6 seitlich auskragende Befestigungsteile 14 auf, die mit Bohrungen 16 versehen sind, mittels denen das Gehäuse 2 an der zu betätigenden Einrichtung montierbar ist, beispielsweise einem (nicht gezeigten) Ventilblock.

Eine Spulenaufnahme 18 in Form eines einstückigen Kunststoffteils, mit einem vom Kunststoffmaterial umspritzten, eine Wicklung 20 aufweisender Spulenkörper 32, ist mit seiner kreiszylindrischen Außenumfangsfläche 22 im Kreiszylinder 10 des Mantels 4 aufgenommen. Die Spulenaufnahme 18 weist ein aus dem oberen Ende 8 des Gehäuses 2 vorstehendes Anschlussteil 24 zur Bildung einer Steckverbindung mit die Wicklung versorgenden Kontaktelementen 26 auf. Eine Ringnut 28, die in der Außenumfangsfläche 22 in der Nähe des Übergangs zum Anschlussteil 24 ausgebildet ist, bildet den Sitz für ein Dichtelement 30, das den inneren Kreiszylinder 10 gegen das obere Ende 8 abdichtet. Der an der Innenseite der Wicklung 20 anliegende Spulenkörper 32 hat die Form eines Hohlzylinders mit einem dem oberen Gehäuseende 8 zugewandten Bodenteil 34 und einem offenen Ende 36, an dem er mit einem radial nach außen umgelegten Endrand 38 an der einen Polschuh bildenden Flanschplatte 6 anliegt.

Zur Bildung einer druckfesten Auskleidung der Innenseite des Spulenkörpers 32 ist eine metallische Hülse 40, beispielsweise aus einem nichtmagnetischen Edelstahl, vorgesehen, die die Form eines Topfes aufweist, der mit seinem geschlossenen Ende am Bodenteil 34 des Spulenkörpers 32 anliegt und an der Flanschplatte 6 offen ist. In eine zur Betätigungsachse 12 axiale Öffnung 42 der Flanschplatte 6 ist ein Polkern 44 eingesetzt, der an seinem Außenumfang durch einen Dichtring 46 an der Hülse 40 abgedichtet ist. Zusammen mit dem geschlossenen Ende der Hülse 40 begrenzt der Polkern 44 einen Ankerraum 48, in dem ein Magnetanker 50 entlang der Betätigungsachse 12 innerhalb einer Führungshülse 52 bewegbar ist. Für die Betätigung der betreffenden Einrichtung, wie eines Ventils, ist in einem koaxialen Durchgang 54 des Polkerns 44 ein Betätigungsteil 56 bewegbar geführt.

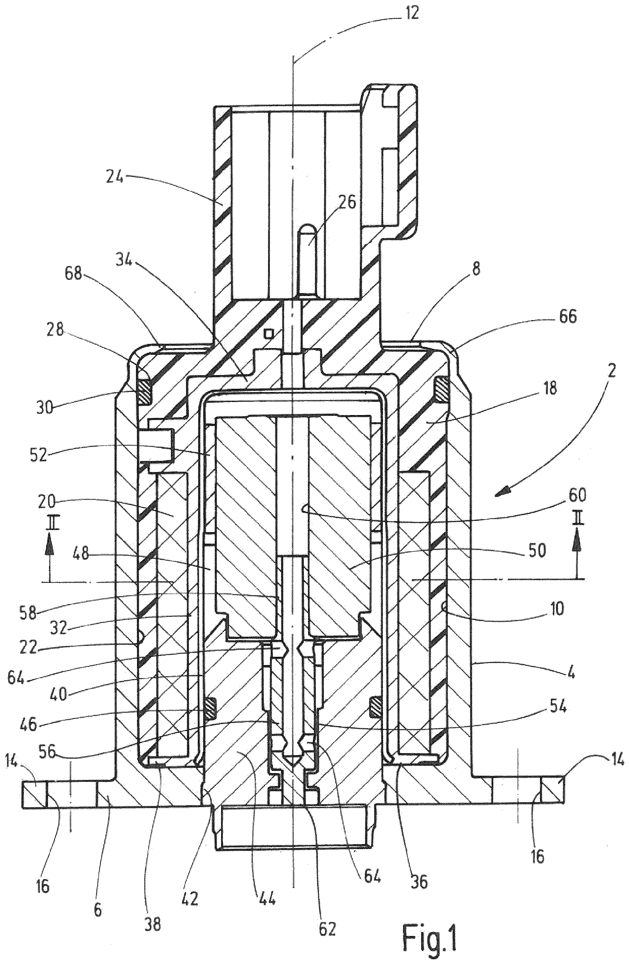

Das Betätigungsteil 56 greift mit einem hohlen, verjüngten Endabschnitt 58 derart in eine Durchgangsbohrung 60 des Ankers 50 ein, dass das Betätigungsteil bei einer Bewegung in Richtung auf den Polkern 44 mitbewegt wird. Am geschlossenen äußeren Ende bildet das Betätigungsteil 56 ein Druckstück 62 für die Betätigung der zugeordneten Einrichtung, wie des Ventils. Die Fig. 1 zeigt den Zustand bei bestromter Wicklung, wobei der Anker 50 das Betätigungsteil 56 gegen eine Rückstellkraft, die von der zu betätigenden, nicht gezeigten Einrichtung generiert ist, in die nach unten vorgeschobene Position bewegt ist. Für den Druckausgleich bei den Verfahrbewegungen sind am hohlen Schaftbereich des Betätigungsteils 56 Bohrungen 64 vorgesehen. Die Fig. 1 zeigt den Zustand, nachdem die Spulenaufnahme 18 vom zunächst offenen Ende 8 des Gehäuses 2 her eingesetzt ist, wonach für den Verschluss des Gehäuses 2 und die Festlegung der eingesetzten Spulenaufnahme 18 der Mantel 4 mit seinem oberen Endabschnitt derart abgedreht worden ist, dass ein endseitiger, dünnwandiger Wandabschnitt 66 gebildet ist, der zur Bildung einer Umbördelung 68 nach innen umgelegt ist.

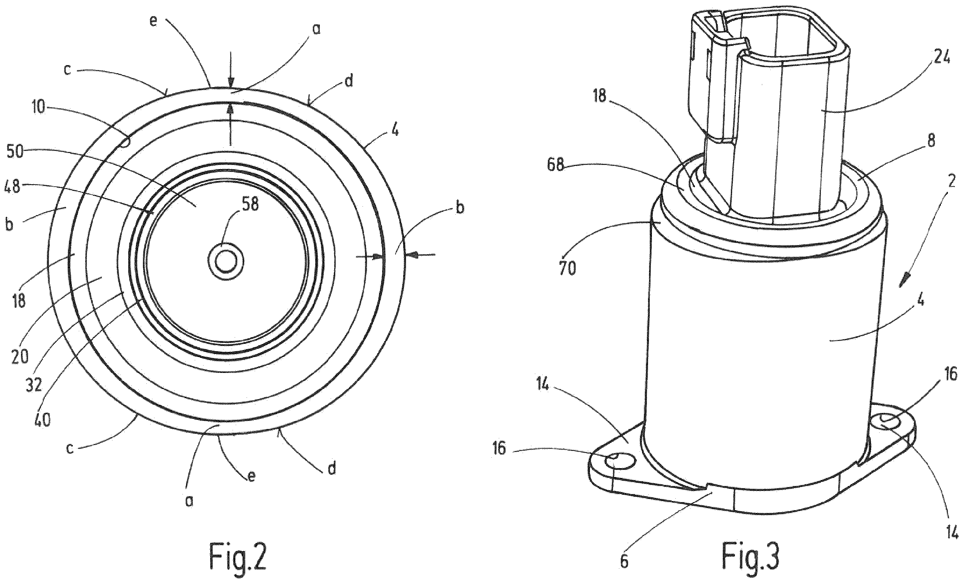

Wie die Fig. 2 und 3, und am deutlichsten Fig. 2, zeigen, weist der Mantel 4 einen unrunden Umriss auf. Diese unrunde Form ist durch eine bereichsweise ausgebildete Verdickung des Querschnitts des Mantels 4 gebildet. Während der Innenumfang des Mantels 4 durch den Kreiszylinder 10 gebildet ist, weist die Außenseite Wandabschnitte mit unterschiedlichem Durchmesser auf. Wie in Fig. 2 angegeben, sind zwei einander diametral gegenüberliegende Abschnitte durch je einen mit e bezeichneten Kreiszylinderabschnitt gebildet, die sich zwischen mit c und d bezeichneten Übergangsstellen befinden. Innerhalb der von den Kreiszylinderabschnitten e begrenzten Abschnitte hat der Mantel 4 die mit a bezeichnete, geringste Wandstärke. An die Übergangsstellen c und d anschließend verbreitert sich die Wandstärke des Mantels 4 stetig, bis zu jeweils mit b bezeichneten Wandstärkenmaxima, die zu den mit a bezeichneten Wandstärkenminima um jeweils 90° versetzt sind. Die Wandstärkenmaxima b liegen auf der Verbindungslinie zwischen den Montagebohrungen 16 der Befestigungsteile 14 der Flanschplatte 6.

Bei dieser Gestaltung ist so an zwei zueinander diametralen Seiten jeweils eine in Fig. 3 mit 70 bezeichnete Materialanhäufung gebildet, die in der Form eines flachen Längswulstes 70 jeweils in Richtung der Befestigungsteile 14 einen Überstand als Abweichung zur Kreiszylinderform bilden. Bei dem gezeigten Beispiel beträgt die Wandstärke der Maxima b das Doppelte der Wandstärkenminima a. Bei einer praktischen Ausführungsform in Form eines Kompaktmagneten, der eine zwischen den Kreiszylinderteilen e gemessene Montagebreite von 30 mm besitzt, kann bei diesem Wandstärkenverhältnis die senkrecht zur Montagebreite gemessene Außenabmessung des Mantels 4 auf der Verbindungslinie mit den Befestigungsbohrungen 16 34 mm betragen. In der Schnittdarstellung der Fig. 1 ist bei der durch die Befestigungsbohrungen 16 verlaufenden Schnittebene der Mantel 4 mit der maximalen Wandstärke b dargestellt. Sofern bei der vorstehend dargelegten Ausführungsform kreiszylindrische Teile angesprochen sind, können diese auch mehreckförmig ausgestaltet sein.

## Patentansprüche

1. Betätigungsmagnet, mit einem einen Mantel (4) aufweisenden Magnetgehäuse (2) und mit mindestens einem im Magnetgehäuse (2) angeordneten Spulenkörper (32) der bei Bestromung einen Magnetanker (50) zumindest in einer Richtung längs einer Betätigungsachse (12) verfährt, wobei der Mantel (4) des Magnetgehäuses (2) entlang seiner Längserstreckung parallel zur Betätigungsachse (12) und im Querschnitt gesehen an mindestens einer Stelle eine Materialanhäufung (70) aufweist, die von der sonstigen Materialverteilung im Mantel (4) des Magnetgehäuses (2) abweicht, **dadurch gekennzeichnet, dass** der Mantel (4) des Magnetgehäuses (2) sich an seinem einen Ende in eine Flanschplatte (6) erweitert mit zwei entlang der Betätigungsachse (12) diametral einander gegenüberliegenden, stegartigen Befestigungsteilen (14), die in derselben Richtung wie die jeweils zuordenbare Materialanhäufung (70) vorstehen.

2. Betätigungsmagnet nach Anspruch 1, **dadurch gekennzeichnet, dass** der Mantel (4) des Magnetgehäuses (2) die jeweilige Materialanhäufung (70) über seine gesamte Längserstreckung aufweist.

3. Betätigungsmagnet nach Anspruch 1 oder 2, **dadurch gekennzeichnet, dass** die jeweilige Materialanhäufung (70) eine Verdickung (b) im Mantelquerschnitt bildet, die vorzugsweise gleichförmig über die gesamte Längserstreckung des Mantels (4) verläuft.

4. Betätigungsmagnet nach einem der vorstehenden Ansprüche, **dadurch gekennzeichnet, dass** der Mantel (4) auf seiner Innenumfangsseite einen Kreiszylinder (10) ausbildet, der auf seiner Außenseite teilweise von Kreiszylinderabschnitten (e) mit größerem Durchmesser umfasst ist, zwischen deren Enden sich die Wand des Mantels (4), im Querschnitt gesehen, stetig unter Bildung der jeweiligen Materialanhäufung (70) verbreitert.

5. Betätigungsmagnet nach einem der vorstehenden Ansprüche, **dadurch gekennzeichnet, dass** zwei Materialanhäufungen (70) sich diametral zur Betätigungsachse (12) einander gegenüberliegend im Mantel (4) des Magnetgehäuses (2) erstrecken.

6. Betätigungsmagnet nach Anspruch 5, **dadurch gekennzeichnet, dass**, im Querschnitt gesehen, der innere Umfang des Mantels (4) ein Kreis (10) und der äußere Umfang eine Art Oval ist.

7. Betätigungsmagnet nach einem der vorstehenden Ansprüche, **dadurch gekennzeichnet, dass** der Mantel (4) des Magnetgehäuses (2) sich an seinem einen Ende einstückig in die Flanschplatte (6) erweitert.

8. Betätigungsmagnet nach einem der vorstehenden Ansprüche, **dadurch gekennzeichnet, dass** der Mantel (4) des Magnetgehäuses (2) an seinem der Flanschplatte (6) gegenüberliegenden Ende (8) ein zylindrisches Endstück (66, 68) ausbildet, das umgebördelt den in einer Spulenaufnahme (18) jeweils aufgenommenen Spulenkörper (32) im Magnetgehäuse (2) festlegt.

9. Betätigungsmagnet nach einem der vorstehenden Ansprüche, **dadurch gekennzeichnet, dass** der in der Spulenaufnahme (18) aufgenommene Spulenkörper (32) benachbart zu der Flanschplatte (6) endet.

10. Betätigungsmagnet nach einem der vorstehenden Ansprüche, **dadurch gekennzeichnet, dass** das Magnetgehäuse (2), bestehend aus dem Mantel (4), der Flanschplatte (6) und dem umbördelbaren Ende (8), aus einem Fließpressteil gebildet ist.

## Claims

1. Actuation magnet, with a magnet housing (2) comprising a jacket (4) and with at least one coil form (32) arranged in the magnet housing (2), said coil form, when energised, moving a solenoid armature (50) at least in one direction along an actuation axis (12), the jacket (4) of the magnet housing (2) comprising a material accumulation (70) along its longitudinal extension parallel to the actuation axis (12) when viewed in cross-section at at least one point, said material accumulation differing from the other material distribution in the jacket (4) of the magnet housing (2), **characterised in that** the jacket (4) of the magnet housing (2) enlarges at one end into a flange plate (6) with two web-like fixing parts (14) diametrically opposite one another along the actuation axis (12), said fixing parts protruding in the same direction as the respective assignable material accumulation (70).

2. Actuation magnet according to claim 1, **characterised in that** the jacket (4) of the magnet housing (2) comprises the respective material accumulation (70) over its entire longitudinal extension.

3. Actuation magnet according to either claim 1 or claim 2, **characterised in that** the respective material accumulation (70) forms a thickening (b) in the jacket cross-section, said thickening preferably running uniformly over the entire longitudinal extension of the jacket (4).

4. Actuation magnet according to any one of the preceding claims, **characterised in that** the jacket (4) forms a circular cylinder (10) on its inner peripheral side, which is partially surrounded on its outer side by circular cylindrical sections (e) with a larger diameter, between the ends of which the wall of the jacket (4), when viewed in cross-section, enlarges continuously to form the respective material accumulation (70).

5. Actuation magnet according to any one of the preceding claims, **characterised in that** two material accumulations (70) extend diametrically opposite one another in relation to the actuation axis (12) in the jacket (4) of the magnet housing (2).

6. Actuation magnet according to claim 5, **characterised in that**, when viewed in cross-section, the inner circumference of the jacket (4) is a circle (10) and the outer circumference is a kind of oval.

7. Actuation magnet according to any one of the preceding claims, **characterised in that** the jacket (4) of the magnet housing (2) enlarges in one piece into the flange plate (6) at one end of said jacket.

8. Actuation magnet according to any one of the preceding claims, **characterised in that** the jacket (4) of the magnet housing (2) forms a cylindrical end piece (66, 68) at its end (8) opposite the flange plate (6), said cylindrical end piece fixing the coil form (32), which is received in a coil holder (18) in each case, in the magnet housing (2) by crimping.

9. Actuation magnet according to any one of the preceding claims, **characterised in that** the coil form (32) received in the coil holder (18) ends adjacent to the flange plate (6).

10. Actuation magnet according to any one of the preceding claims, **characterised in that** the magnet housing (2), consisting of the jacket (4), the flange plate (6) and the crimpable end (8), is formed from an extrusion part.

## Revendications

1. Aimant d'actionnement, comprenant un boîtier (2) d'aimant ayant une enveloppe (4) et comprenant au moins un corps (32) de bobine, qui est disposé dans le boîtier (2) de l'aimant et qui, lors de l'alimentation en courant, déplace une armature (50) d'aimant au moins dans un sens suivant un axe (12) d'actionnement, l'enveloppe (4) du boîtier (2) de l'aimant ayant, suivant son étendue longitudinale, parallèlement à l'axe (12) d'actionnement et considéré en section transversale, en au moins un point, une accumulation (70) de matière, qui s'écarte de la répartition de matière par ailleurs dans l'enveloppe (4) du boîtier (2) de l'aimant, **caractérisé en ce que** l'enveloppe (4) du boîtier (2) de l'aimant s'élargit à l'une de ses extrémités en un plateau (6) à bride ayant deux parties (14) de fixation de type en nervure, opposées diamétralement l'une à l'autre suivant l'axe (12) d'actionnement, qui font saillie dans la même direction que l'accumulation (70) de matière, pouvant être associée respectivement.

2. Aimant d'actionnement suivant la revendication 1, **caractérisé en ce que** l'enveloppe (4) du boîtier (2) de l'aimant a l'accumulation (70) respective de matière sur toute son étendue longitudinale.

3. Aimant d'actionnement suivant la revendication 1 ou 2, **caractérisé en ce que** l'accumulation (70) respective de matière forme un épaississement (b) dans la section transversale de l'enveloppe, qui s'étend, de préférence, uniformément sur toute l'étendue longitudinale de l'enveloppe (4).

4. Aimant d'actionnement suivant l'une des revendications précédentes, **caractérisé en ce que** l'enveloppe (4) constitue, sur sa face de pourtour intérieure, un cylindre (10) de section droite circulaire, qui est compris sur sa face extérieure en partie par des parties (e) de cylindre circulaire de diamètre plus grand, entre les extrémités desquelles la paroi de l'enveloppe (4), considéré en section transversale, s'élargit constamment en formant l'accumulation (70) respective de matière.

5. Aimant d'actionnement suivant l'une des revendications précédentes, **caractérisé en ce que** deux accumulations (70) de matière s'étendent, en étant opposées l'une à l'autre diamétralement par rapport à l'axe (12) d'actionnement, dans l'enveloppe (4) du boîtier (2) de l'aimant.

6. Aimant d'actionnement suivant la revendication 5, **caractérisé en ce que**, considéré en section transversale, le pourtour intérieur de l'enveloppe (4) est un cercle (10) et le pourtour extérieur une sorte d'ovale.

7. Aimant d'actionnement suivant l'une des revendications précédente, **caractérisé en ce que** l'enveloppe (4) du boîtier (2) de l'aimant s'élargit à l'une de ses extrémités d'une seule pièce en le plateau (6) à bride.

8. Aimant d'actionnement suivant l'une des revendications précédentes, **caractérisé en ce que** l'enveloppe (4) du boîtier (2) de l'aimant constitue, à son extrémité (8) opposée au plateau (6) à bride, un embout (66, 68) cylindrique, qui, rabattu, fixe, dans le boîtier (2) de l'aimant, le corps (32) de la bobine reçu respectivement dans un logement (18) de bobine.

9. Aimant d'actionnement suivant l'une des revendications précédentes, **caractérisé en ce que** le corps (32) de la bobine, reçu dans le logement (18) de bobine, se termine au voisinage du plateau (6) à bride.

10. Aimant d'actionnement suivant l'une des revendications précédentes, **caractérisé en ce que** le boîtier (2) de l'aimant, constitué de l'enveloppe (4), du plateau (6) à bride et de l'extrémité (8) rabattue, est formé d'une pièce filée à la presse.
